(19) Europäisches Patentamt
European Patent Office
Office européen des brevets

(11) **EP 3 517 643 A1**

(12) **EUROPEAN PATENT APPLICATION**
published in accordance with Art. 153(4) EPC

(43) Date of publication:
**31.07.2019 Bulletin 2019/31**

(51) Int Cl.:
*C22C 38/00* (2006.01)   *C21D 9/46* (2006.01)
*C22C 38/06* (2006.01)   *C22C 38/58* (2006.01)

(21) Application number: **16916758.2**

(22) Date of filing: **21.09.2016**

(86) International application number:
**PCT/JP2016/077801**

(87) International publication number:
**WO 2018/055687 (29.03.2018 Gazette 2018/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nippon Steel & Sumitomo Metal Corporation**
**Tokyo 100-8071 (JP)**

(72) Inventors:
• **SANO Kohichi**
  **Tokyo 100-8071 (JP)**

• **AZUMA Masafumi**
  **Tokyo 100-8071 (JP)**
• **SAKAKIBARA Mutsumi**
  **Tokyo 100-8071 (JP)**
• **UENISHI Akihiro**
  **Tokyo 100-8071 (JP)**
• **HAYASHI Koutarou**
  **Tokyo 100-8071 (JP)**

(74) Representative: **Vossius & Partner**
**Patentanwälte Rechtsanwälte mbB**
**Siebertstrasse 3**
**81675 München (DE)**

(54) **STEEL PLATE**

(57)    A steel sheet according to an aspect of the present invention includes a predetermined chemical composition; in which a metallographic structure in a 1/4 t portion contains residual austenite of 4 volume% to 70 volume%; $[Mn]_\gamma/[Mn]_{ave}>1.5$ is satisfied in the 1/4 t portion; $f_{\gamma s}/f_\gamma \leq 0.30$ and $[C]\times[Mn]>0.15$ are satisfied in the 1/4 t portion.

FIG. 1

EP 3 517 643 A1

**Description**

[Technical Field of the Invention]

The present invention relates to a steel sheet having excellent fomability, that is, excellent uniform elongation, excellent weldability, and high strength.

[Related Art]

In order to achieve both weight reduction and safety in vehicle bodies, components, and the like of vehicles, high-strengthening of steel sheets used as materials thereof has been in progress. Generally, if a steel sheet is highly strengthened, uniform elongation, hole expansibility, and the like are degraded, so that formability of the steel sheet is impaired. Therefore, in order to use high strength steel sheets as members for vehicles, both strength and formability, which are properties being contrary to each other, are required to be enhanced.

In order to improve uniform elongation, a so-called TRIP steel sheet utilizing transformation induced plasticity of residual austenite (residual $\gamma$) is proposed at present (for example, refer to Patent Documents 1 and 2).

Residual austenite is obtained by partitioning C, Mn, and the like in austenite such that the austenite is not transformed to a different structure even at room temperature. As a technology of stabilizing austenite, a technology, in which a steel sheet contains elements such as Si and Al restraining the formation of carbide, and C is concentrated in austenite during bainitic transformation generated in the steel sheet at a stage of manufacturing the steel sheet, has been proposed.

In this technology, if the C content contained in a steel sheet is increased, austenite is further stabilized and the amount of residual austenite can be increased. As a result, a steel sheet which is excellent in both strength and uniform elongation can be made. However, in a case where a steel sheet is used in a structural member, the steel sheet is often subjected to welding. If a C content is in a steel sheet, it leads to deterioration in weldability, so that the steel sheet is limited in being used as a structural member. Therefore, it is desired to increase both uniform elongation and strength even if the C content is small.

In addition, in order to enhance hole expansibility of a TRIP steel sheet, a steel having bainite as a main structure has been proposed (for example, Patent Document 3). However, in a case where bainite having low ductility is used as a main structure, ductility of a steel sheet is degraded, so that it is difficult to produce vehicle members having a complicated shape.

On the other hand, as a steel sheet which has a larger amount of residual austenite than a TRIP steel and of which ductility exceeds that of the TRIP steel, a steel in which Mn of more than 3.0% is added has been proposed (for example, Non-Patent Document 1). However, there are few examples for this kind of steel being intended to be applied to members for vehicles, and improvement in hole expansibility has not been sufficiently examined. Steel sheets which contain Mn of more than 3.0% and of which hole expansibility and the like are improved have not been developed yet.

Patent Document 4 discloses a high strength steel sheet in which mechanical properties are improved by performing annealing before cold rolling. However, the steel sheet disclosed in Patent Document 4 is a DP steel having an excellent r value, but the steel sheet is not excellent in strength and ductility. Particularly, Patent Document 4 discloses a technology in which cementite is precipitated in ferrite-pearlite and ferrite of a steel sheet at the time of coiling treatment after hot rolling, and cementite is coarsened and spheroidized before cold rolling. Steel sheets having such a structure do not exhibit all of tensile strength, ductility, and hole expansibility required in steel sheets for vehicles.

[Prior Art Document]

[Patent Document]

[Patent Document 1] Japanese Unexamined Patent Application, First Publication No. S61-217529
[Patent Document 2] Japanese Unexamined Patent Application, First Publication No. H5-59429
[Patent Document 3] Japanese Unexamined Patent Application, First Publication No. 2005-330584
[Patent Document 4] Japanese Patent No. 5082451

[Non-Patent Document]

[Non-Patent Document 1] Takashi FURUKAWA, Osamu MATSUMURA, heat treatment, Japan, Japan Society for Heat Treatment, 1997, Vol. 37, No. 4, p. 204

[Disclosure of the Invention]

[Problems to be Solved by the Invention]

An object of the present invention is to provide a steel sheet having excellent uniform elongation and hole expansibility, high strength, and a favorable weldability.

[Means for Solving the Problem]

In order to improve weldability, a C content is required to be reduced. In order to ensure excellent uniform elongation and hole expansibility, and high strength with a small C content, the inventors have ascertained that it is effective to disperse residual austenite of 7 area% or more in a steel sheet and also to control a form of the residual austenite. Such a gist of the present invention is as follows.

(1) According to an aspect of the present invention, there is provided a steel sheet including by unit mass%, C: 0.03% to 0.40%, Si: 0.01% to 5.00%, Mn: 0.50% to 12.00%, Al: 0.001% to 5.000%, P: 0.150% or less, S: 0.0300% or less, N: 0.0100% or less, O: 0.0100% or less, Cr: 0% to 5.00%, Mo: 0% to 5.00%, Ni: 0% to 5.00%, Cu: 0% to 5.00%, Nb: 0% to 0.500%, Ti: 0% to 0.500%, V: 0% to 0.500%, W: 0% to 0.500%, B: 0% to 0.0030%, Ca: 0% to 0.0500%, Mg: 0% to 0.0500%, Zr: 0% to 0.0500%, REM: 0% to 0.0500%, Sb: 0% to 0.0500%, Sn: 0% to 0.0500%, As: 0% to 0.0500%, Te: 0% to 0.0500% and a remainder including Fe and impurities; in which a metallographic structure in a 1/4 t portion contains residual austenite of 4 volume% to 70 volume%; an average Mn concentration $[Mn]_\gamma$ in the residual austenite by unit mass% satisfies Expression 1 with respect to an average Mn concentration $[Mn]_{ave}$ of the entire 1/4 t portion by unit mass%, in the 1/4 t portion; a volume fraction $f_{\gamma s}$ of the residual austenite having an aspect ratio of 2.0 or less and a volume fraction $f_\gamma$ of all the residual austenite satisfy Expression 2, in the 1/4 t portion; and a C content [C] and a Mn content [Mn] by unit mass% satisfy Expression 3.

$$[Mn]_\gamma/[Mn]_{ave} > 1.5 \ ... \text{(Expression 1)}$$

$$f_{\gamma s}/f_\gamma \leq 0.30 \ ... \text{(Expression 2)}$$

$$[C] \times [Mn] \geq 0.15 \ ... \text{(Expression 3)}$$

(2) The steel sheet according to (1) may include, by unit mass%, Mn: 3.50% to 12.00%.
(3) The steel sheet according to (1) or (2) may include, by unit mass%, one or more selected from the group consisting of Cr: 0.01% to 5.00%, Mo: 0.01% to 5.00%, Ni: 0.01% to 5.00%, Cu: 0.01% to 5.00%, Nb: 0.005% to 0.500%, Ti: 0.005% to 0.500%, V: 0.005% to 0.500%, W: 0.005% to 0.500%, B: 0.0001% to 0.0030%, Ca: 0.0001% to 0.0500%, Mg: 0.0001% to 0.0500%, Zr: 0.0005% to 0.0500%, REM: 0.0005% to 0.0500%, Sb: 0.0050% to 0.0500%, Sn: 0.0050% to 0.0500%, As: 0.0050% to 0.0500%, and Te: 0.0050% to 0.0500%.
(4) The steel sheet according to any one of (1) to (3) may include a hot dip galvanized layer on a surface of the steel sheet.
(5) The steel sheet according to any one of (1) to (3) may include a galvannealed layer on a surface of the steel sheet.

[Effects of the Invention]

In the steel sheet according to the aspect of the present invention, since the C content is 0.40 mass% or less, the steel sheet has excellent weldability. In addition, in the steel sheet according to the present invention, the product "TSxuEL" of tensile strength and uniform elongation is high. This means that both tensile strength and uniform elongation which are properties being contrary to each other are excellent. Moreover, in the steel sheet according to the present invention, the product "TS×λ" of tensile strength and hole expansibility is high. This means that both tensile strength and hole expansibility which are properties being contrary to each other are excellent.
According to the present invention, it is possible to provide a high strength steel sheet having more excellent tensile strength, uniform elongation, and hole expansibility than those in a technology in the related art, with a smaller C content than that in the technology in the related art. Particularly, both weight reduction and safety of vehicles can be enhanced and easy welding can also be ensured by using this steel sheet. Thus, industrial contribution is extremely remarkable.

[Brief Description of the Drawings]

FIG. 1 is a view showing an influence for $f_{\gamma s}/f_\gamma$ of an average heating rate at the time of first annealing.

FIG. 2 is a view showing an influence for $f_{\gamma s}/f_\gamma$ of a maximum heating temperature at the time of the first annealing.

FIG. 3 is a view showing an influence for $[Mn]_\gamma/[Mn]_{ave}$ of the maximum heating temperature at the time of the first annealing.

FIG. 4 is a view showing an influence for $f_{\gamma s}/f_\gamma$ of the average heating rate at the time of second annealing.

[Embodiment of the Invention]

As a result of repetitively conducted extensive investigations, the inventors have found that in a case where an average Mn concentration $[M\eta]_\gamma$ in residual austenite by unit mass% satisfies the following (Expression 1) with respect to an average Mn concentration $[Mn]_{ave}$ of the entire 1/4 t portion by unit mass% and a volume fraction $f_{\gamma s}$ of residual austenite having an aspect ratio of 2.0 or less and a volume fraction $f_\gamma$ of all the residual austenite satisfy the following (Expression 2) in a 1/4 t portion of a steel sheet, it is possible to produce a high strength steel sheet which has a small C content and is excellent in uniform elongation and hole expansibility. The 1/4 t portion of a steel sheet indicates a region at a depth of approximately 1/4 of a thickness t of the steel sheet from a rolled surface of the steel sheet. The 1/4 t portion of a steel sheet may be defined as a region between a surface at a depth of 1/8 t and a surface at a depth of 3/8 t from a rolled surface of the steel sheet.

$$[Mn]_\gamma/[Mn]_{ave}>1.5 \ ... \ (Expression\ 1)$$

$$f_{\gamma s}/f_\gamma \leq 0.30 \ ... \ (Expression\ 2)$$

Hereinafter, there are cases where "an average Mn concentration by unit mass%" is simply referred to as "an average Mn concentration" and $[Mn]_\gamma/[Mn]_{ave}$ is referred to as "a degree of Mn concentration". In addition, all of the features of a metallographic structure in the steel sheet according to the present embodiment described below are features of a metallographic structure in the 1/4 t portion of a steel sheet (that is, a region at a depth of 1/4 of the thickness t of a steel sheet from the rolled surface of the steel sheet). It is assumed that the 1/4 t portion of a steel sheet present between the rolled surface of the steel sheet and a central plane in a thickness direction of the steel sheet has an average metallographic structure. Therefore, in the technical field related to steel sheets, the 1/4 t portion of a steel sheet is normally regarded as a control target for a metallographic structure. If a metallographic structure in the 1/4 t portion of the steel sheet according to the present embodiment is controlled as described below, metallographic structures in regions other than the 1/4 t portion of the steel sheet is also preferably controlled. Therefore, tensile strength, uniform elongation, and hole expansibility of the steel sheet according to the present embodiment exceed target values. Therefore, the configuration of a metallographic structure in regions other than the 1/4 t portion of a steel sheet is not particularly limited as long as the configuration of the metallographic structure in the 1/4 t portion of the steel sheet is within a predetermined range described in the present embodiment. In the present embodiment, unless otherwise specified, the disclosure regarding the configuration of a metallographic structure in a steel sheet relates to a metallographic structure in a 1/4 t portion of a steel sheet.

Hereinafter, reasons for regulating the degree of Mn concentration and the aspect ratio of residual austenite as described above will be described.

$$([Mn]_\gamma/[Mn]_{ave}>1.5)$$

In a TRIP steel, during a process of annealing, a C concentration in austenite is increased through ferritic transformation and/or bainitic transformation, so that the austenite is stably present even at room temperature. As a convenient method for obtaining a steel sheet having higher strength and higher uniform elongation, a way of increasing the amount of residual austenite by increasing the C content is known. However, if the C content is increased, weldability of a steel sheet is deteriorated. Therefore, the technique cannot be used for steel sheets used in structural members and the like which require welding.

Accordingly, the inventors have examined a method of manufacturing a steel sheet in which uniform elongation can be enhanced without increasing the C content. As a result, the inventors have found that in a case where the Mn concentration in residual austenite is increased by suitably controlling hot rolling conditions and conditions for heat treatment after hot rolling and before cold rolling such that (Expression 1) is satisfied, uniform elongation is improved while strength and the C content are maintained.

Detailed reasons causing the phenomenon described above are unknown. However, the inventors have assumed that a larger amount of residual austenite can be ensured by partitioning Mn, which is a stabilizing element for austenite, in austenite, so that uniform elongation is increased.

In a case where the degree of Mn concentration is 1.5 or less, uniform elongation is impaired, so that required mechanical properties cannot be achieved. It is assumed that the degree of Mn concentration in a steel sheet obtained under normal manufacturing conditions is approximately 1.2 to 1.4. A preferable lower limit value for the degree of Mn concentration is 1.52, 1.54, or 1.56.

The ratio of the Mn concentration in the 1/4 t portion is obtained by polishing a cross section perpendicular to a rolling direction and the rolled surface of a steel sheet, and measuring $[Mn]_\gamma$ and $[Mn]_{ave}$ in the 1/4 t portion of this cross section using a device such as a field emission scanning electron microscopy which can perform local analysis.

$$(f_{\gamma S}/f_\gamma \leq 0.30)$$

In addition, the inventors have found that if the volume fraction $f_{\gamma S}$ of residual austenite having an aspect ratio of 2.0 or less and the volume fraction $f_\gamma$ of all the residual austenite satisfy (Expression 2) described above, the hole expansion rate is improved. In a case where a steel sheet satisfying Expression 2 and a steel sheet not satisfying Expression 2 having equivalent strength are compared to each other, the steel sheet satisfying Expression 2 has a higher hole expansion rate.

The reason that hole expansibility is improved when the volume fraction $f_{\gamma S}$ of residual austenite having an aspect ratio of 2.0 or less is reduced, is uncertain. As the reason therefor, the inventors have presumed that residual austenite having an aspect ratio of 2.0 or less is present in boundaries of prior austenite, boundaries of packets, and the like, and most thereof has a grain size exceeding 1.0 $\mu$m, so that stress is likely to be concentrated in residual austenite having an aspect ratio of 2.0 or less during hole widening and it is likely to be fractured. Therefore, the value of $f_{\gamma S}/f_\gamma$ is required to be set to 0.30 or less. The value of $f_{\gamma S}/f_\gamma$ is more preferably 0.25 or less and is further preferably 0.20 or less.

A method of calculating $f_{\gamma S}/f_\gamma$ in the 1/4 t portion is as follows. First, the fraction $f_{\gamma S}$ of residual austenite having an aspect ratio of 2.0 or less in the 1/4 t portion is obtained by performing EBSP analysis of the 1/4 t portion. In this EBSP analysis, an fcc phase and a bcc phase are separated from each other. A part in which the fcc phase is in a blocky morphology is regarded as one residual austenite grain, and the aspect ratio is a ratio of the longest width to the shortest width of the grain. The amount $f_\gamma$ of all the residual austenite in the 1/4 t portion is obtained by performing measurement using X-ray diffraction in the 1/4 t portion.

Next, the composition of the steel sheet according to the present embodiment will be described. In the description below, the symbol % of the content means mass%.

(C: 0.03% to 0.40%)

C is an element which is extremely important for enhancing strength of a steel and ensuring residual austenite. In order to obtain a sufficient amount of residual austenite, the C content of 0.03% or more is required. On the other hand, if the C content is excessively contained, weldability of a steel sheet is impaired. Therefore, the upper limit for the C content is set to 0.40% or less. A preferable lower limit value for the C content is 0.04%, 0.09%, or 0.14%. A preferable upper limit value for the C content is 0.36%, 0.32%, or 0.25%.

(Mn: 0.50% to 12.00%)

Mn is an element which stabilizes austenite and enhances hardenability. In addition, in the steel sheet according to the present embodiment, Mn is distributed in austenite such that the austenite is further stabilized. In order to stabilize austenite at room temperature, Mn of 0.50% or more is required. On the other hand, if Mn is excessively contained, ductility is impaired. Therefore, the upper limit for the Mn content is set to 12.00%. A preferable lower limit value for the Mn content is 1.50%, 2.30%, 3.00%, or 3.50%. A preferable upper limit value for the Mn content is 10.00%, 8.00%, or 6.00%.

(Si: 0.01% to 5.00%)

(Al: 0.001% to 5.000%)

Si is a deoxidizing agent, which is required to be contained 0.01% or more. Al is also a deoxidizing agent, which is required to be contained 0.001% or more. In addition, Si and Al are elements which stabilize ferrite at the time of annealing of a steel sheet and are elements which increase the C concentration of austenite by suppressing precipitation of cementite at the time of bainitic transformation and contribute to ensuring residual austenite. In addition, Si and Al enhance hole expansibility of a steel sheet. The reason therefor is uncertain, and it is assumed that tempered martensite or ferrite in a primary phase is hardened so that the hardness difference between martensite transformed from austenite during deformation and tempered martensite or ferrite is reduced.

The more the Si content and the Al content, the higher the effect thereof. However, if Si and Al are excessively contained, deteriorations in surface properties, coatability, weldability, and the like are caused. Therefore, the upper limit for Si is set to 5.00% or less, and the upper limit for Al is set to 5.000% or less. In addition, in a case where an amount of Al exceeding 5.000% is contained, delta ferrite remains even at room temperature. The ferrite becomes ferrite elongated at the time of hot rolling, and stress is concentrated in the ferrite at the time of a tensile test or press forming, so that a steel sheet is likely to be fractured. A preferable lower limit value for the Si content is 0.40%, 0.90%, or 1.20%. A preferable upper limit value for the Si content is 4.00%, 3.50%, or 3.00%.

(P: 0.150% or less)

P is an impurity, and excessively contained P will impair ductility or weldability. Therefore, the upper limit for the P content is set to 0.150% or less. A preferable upper limit value for the P content is 0.060%, 0.030%, or 0.025%. Since the steel sheet according to the present embodiment does not require P, the lower limit value for the P content is 0%. The lower limit value for the P content may be set to more than 0% or 0.001 %. However, it is preferable that the P content is reduced as much as possible.

(S: 0.0300% or less)

S is an impurity. If S is excessively contained, MnS stretched through hot rolling is generated, thereby causing deterioration in formability such as ductility and hole expansibility. Therefore, the upper limit for the S content is set to 0.0300% or less. A preferable upper limit value for the S content is 0.0100%, 0.0070%, or 0.0040%. Since the steel sheet according to the present embodiment does not require S, the lower limit value for the S content is 0%. The lower limit value for the S content may be set to more than 0% or 0.0001 %. However, it is preferable that the S content is reduced as much as possible.

(N: 0.0100% or less)

N is an impurity. If N exceeds 0.0100%, deterioration in local ductility is caused. Therefore, the upper limit for the N content is set to 0.0100% or less. A preferable upper limit value for the N content is 0.0080%, 0.0060%, or 0.0050%. Since the steel sheet according to the present embodiment does not require N, the lower limit value for the N content is 0%. The lower limit value for the N content may be set to more than 0% or 0.0003%. However, it is preferable that the N content is reduced as much as possible.

(O: 0.0100% or less)

O is an impurity. If O exceeds 0.0100%, deterioration in ductility is caused. Therefore, the upper limit for the O content is set to 0.0100% or less. A preferable upper limit value for the O content is 0.0060%, 0.0040%, or 0.0020%. Since the steel sheet according to the present embodiment does not require O, the lower limit value for the O content is 0%. The lower limit value for the O content may be set to more than 0% or to 0.0001%. However, it is preferable that the O content is reduced as much as possible.

Although those above are basic elements constituting the steel sheet according to the present embodiment, the steel sheet according to the present embodiment may further include one or more selected from the group consisting of Cr, Mo, Ni, Cu, Nb, Ti, V, W, and B. However, the steel sheet according to the present embodiment does not require Cr, Mo, Ni, Cu, Nb, Ti, V, W, and B, the lower limit values for the Cr content, the Mo content, the Ni content, the Cu content, the Nb content, the Ti content, the V content, the W content, and the B content are 0%.

(Cr: 0% to 5.00%)

(Mo: 0% to 5.00%)

(Ni: 0% to 5.00%)

(Cu: 0% to 5.00%)

Cr, Mo, Ni, and Cu are not essential elements for the steel sheet according to the present embodiment. However, Cr, Mo, Ni, and Cu are elements improving strength of a steel sheet. Therefore, Cr, Mo, Ni, and Cu may be contained in the steel sheet according to the present embodiment. In order to achieve this effect, a steel sheet may contain 0.01% or more of each of one or more elements selected from the group consisting of Cr, Mo, Ni, and Cu. However, if these elements are excessively contained, strength of a steel sheet becomes excessively high, so that ductility of a steel sheet may be impaired. Therefore, the upper limit value for each of one or more elements selected from the group consisting of Cr, Mo, Ni, and Cu is set to 5.00%.

(Nb: 0% to 0.500%)

(Ti: 0% to 0.500%)

(V: 0% to 0.500%)

(W: 0% to 0.500%)

Nb, Ti, V, and W are not essential elements for the steel sheet according to the present embodiment. Since Nb, Ti, V, and W are elements which generate fine carbide, nitride, or carbonitride, they are effective to ensure strength of a steel sheet. Therefore, a steel sheet may contain one or more elements selected from the group consisting of Nb, Ti, V, and W. In order to achieve this effect, it is preferable that the lower limit value for each of one or more elements selected from the group consisting of Nb, Ti, V, and W is set to 0.005%. On the other hand, if these elements are excessively contained, there are cases where strength of a steel sheet excessively is increased, so that ductility of a steel sheet is degraded. Therefore, the upper limit value for each of one or more elements selected from the group consisting of Nb, Ti, V, and W is set to 0.500%.

(B: 0% to 0.0030%)

B delays the start of ferritic transformation and bainitic transformation and can enhance strength of a steel. Therefore, as necessary, B may be contained in the steel sheet according to the present embodiment. In order to achieve this effect, it is preferable that the lower limit value for the B content is set to 0.0001%. On the other hand, since an excessive amount of B excessively increases hardenability of a steel sheet and excessively delays the start of ferritic transformation and bainitic transformation, there is concern that it is prevented from partitioning C in residual austenite phase. Therefore, the upper limit for the B content is set to 0.0030%.
The steel sheet according to the present embodiment may further contain one or more elements selected from the group consisting of Ca, Mg, Zr, and REM (rare earth elements). However, the steel sheet according to the present embodiment does not require Ca, Mg, Zr, and REM, the lower limit values for the Ca content, the Mg content, the Zr content, and the REM content are 0%.

(Ca: 0% to 0.0500%)

(Mg: 0% to 0.0500%)

(Zr: 0% to 0.0500%)

(REM: 0% to 0.0500%)

Ca, Mg, Zr, and REM controls the shapes of sulfide and oxide and improves local ductility and hole expansibility of a steel sheet. In order to achieve these effects, one or more selected from the group consisting of Ca of 0.0001 % or more, Mg of 0.0001 % or more, Zr of 0.0005% or more, and REM of 0.0005% or more may be contained in a steel sheet. However, excessive amounts of these elements cause deterioration in workability of a steel sheet. Therefore, the upper limit for each of these elements is set to 0.0500%. It is preferable that the total amount of one or more elements selected from the group consisting of Ca, Mg, Zr, and REM is set to 0.0500% or less.

A steel may further contain one or more selected from the group consisting of Sb, Sn, As, and Te. However, the steel sheet according to the present embodiment does not require Sb, Sn, As, and Te, the lower limit values for the Sb content, the Sn content, the As content, and the Te content are 0%.

(Sb: 0% to 0.0500%)

(Sn: 0% to 0.0500%)

(As: 0% to 0.0500%)

(Te: 0% to 0.0500%)

Sb, Sn, As, and Te restrain easily oxidized elements such as Mn, Si, and/or Al in a steel sheet from being diffused on a surface of the steel sheet and forming oxide and enhances surface properties or coating properties of a steel sheet. In order to achieve these effects, the lower limit value for each of one or more elements selected from the group consisting of Sb, Sn, As, and Te may be set to 0.0050%. On the other hand, if the amount of each of these elements exceeds 0.0500%, the effects thereof are saturated. Therefore, the upper limit value for each of these elements is set to 0.0500%.

$$([C] \times [Mn] \geq 0.15)$$

In the chemical composition of the steel sheet according to the present embodiment, the C content [C] and the Mn content [Mn], by unit mass%, are required to satisfy the following Expression 3.

$$[C] \times [Mn] \geq 0.15 \text{ ... (Expression 3)}$$

Both C and Mn stabilize austenite contained in a steel sheet during heat treatment included in a method of manufacturing a steel sheet and have an effect of increasing the amount of residual austenite in an ultimately obtained steel sheet. In a case where the product of the C content and the Mn content is 0.15 or more, Expression 1 can be satisfied by setting the amount of residual austenite to 4% or more and partitioning Mn in residual austenite. A preferable lower limit value for [C]x[Mn] is 0.30 or 0.50. The upper limit value for $[C] \times [Mn]$ is not particularly required to be set and may be set to 4.80 calculated based on the upper limit value for the C content and the Mn content described above.

Next, a metallographic structure in the steel sheet according to the present embodiment will be described.

A metallographic structure in the steel sheet according to the present embodiment includes residual austenite and other structures consist of one or more of ferrite, residual austenite, fresh martensite, bainite, tempered martensite, and the like.

The fraction of each structure varies depending on the conditions of annealing and affects the quality of a material, such as strength, ductility, and hole expansibility. For example, the quality of a material varies depending on the component for vehicles. Therefore, the structure fraction may be controlled by selecting the annealing conditions as necessary.

(Amount of residual austenite in metallographic structure in 1/4 t portion of steel sheet: 4 volume% to 70 volume%)

In the steel sheet according to the present embodiment, it is important to control the amount of residual austenite. Residual austenite is a structure which enhances ductility of a steel sheet, particularly uniform elongation of a steel sheet through transformation induced plasticity. In addition, since residual austenite is transformed into martensite through deformation, it also contributes to improvement of strength of a steel sheet. In order to achieve these effects, the 1/4 t portion of the steel sheet according to the present embodiment is required to contain residual austenite of 4% or more by volume fraction. Preferably, the lower limit value for the volume fraction of residual austenite is 5%, 7%, 9%, or 12%. As described above, the configuration of a metallographic structure in regions other than the 1/4 t portion of a steel sheet is not particularly limited as long as the configuration of the metallographic structure in the 1/4 t portion of the steel sheet is within a predetermined range described in the present embodiment. The volume fraction of residual austenite in regions other than the 1/4 t portion of a steel sheet is not limited. In the present embodiment, unless otherwise specified, the disclosure regarding the amounts of residual austenite and the like indicates the amounts of residual austenite and the like in a metallographic structure in the 1/4 t portion of the steel sheet.

The higher the volume fraction of residual austenite, the more preferable. However, it is difficult that a steel sheet having the chemical composition described above contains residual austenite of more than 70% by volume fraction. In order to have residual austenite of more than 70 volume%, C of more than 0.40% is required to be contained. In this case, weldability of a steel sheet is impaired. Therefore, the upper limit for the volume fraction of residual austenite is set to 70% or less.

As long as the amount of residual austenite described above is within a regulation range, the remainder of a metallographic structure in the steel sheet according to the present embodiment is not particularly regulated and may be suitably selected in accordance with the required properties. Structures which can be included in a remainder of a metallographic structure are ferrite, fresh martensite, bainite, tempered martensite, and the like. However, structures other than these and inclusions may be included. The upper and lower limit values for ferrite, fresh martensite, bainite, and tempered martensite are not particularly limited. Hereinafter, preferable upper and lower limit values therefor will be described.

Ferrite is a structure which improves ductility of a steel sheet. The amount of ferrite may be set to 0 area%. However, in order to preferably maintain both strength and ductility within a range at an aimed strength level, it is preferable that the area ratio of ferrite is set to 10% to 75%. A more preferable lower limit value for the amount of ferrite is 15 area%, 20 area%, or 25 area%. A more preferable upper limit value for the amount of ferrite is 50 area%, 65 area%, or 70 area%.

A metallographic structure in the steel sheet according to the present embodiment may include fresh martensite (that is, non-tempered martensite). Fresh martensite is a hard structure and is effective to ensure strength of a steel sheet. However, in a case where the amount of fresh martensite is small, ductility of a steel sheet is increased. Therefore, the amount of fresh martensite may be set to 0 area%. In the steel sheet according to the present embodiment, in order to ensure ductility, the upper limit value for the amount of fresh martensite may be set to 25% by area ratio. A preferable lower limit value for the amount of fresh martensite is 0.5 area%, 1 area%, or 2 area%. A preferable upper limit value for the amount of fresh martensite is 20 area%, 15 area%, or 12 area%.

A metallographic structure in the steel sheet according to the present embodiment may include tempered martensite obtained by tempering fresh martensite generated after final annealing. The amount of tempered martensite may be 0 area%. However, tempered martensite is a structure which improves both strength and hole expansibility of a steel sheet. The amount of tempered martensite can be suitably selected in accordance with an aimed strength level. In a case where the upper limit for the amount of tempered martensite is set to 25%, ductility of a steel sheet can be preferably ensured. A more preferable lower limit value for the amount of tempered martensite is 3 area%, 5 area%, or 7 area%. A more preferable upper limit value for the amount of tempered martensite is 22 area%, 20 area%, or 18 area%.

A metallographic structure in the steel sheet according to the present embodiment may include bainite. C is concentrated in austenite during bainitic transformation, so that austenite is stabilized. That is, if heat treatment is performed such that bainite is included in an ultimately obtained steel sheet, residual austenite is stabilized. Moreover, bainite is also a structure which can improve both strength and hole expansibility of a steel sheet. The amount of bainite may be 0 area%. However, in order to achieve these effects, it is preferable to contain bainite of 5 area% or more. In the steel sheet according to the present embodiment, since Mn of 0.5% or more is included, it is difficult to have bainite of 50 area% or more. Therefore, the upper limit value for the amount of bainite may be set to 50 area%. A more preferable lower limit value for the amount of bainite is 7 area%, 8 area%, or 10 area%. A more preferable upper limit value for the amount of bainite is 45 area%, 42 area%, or 40 area%.

A metallographic structure in the steel sheet according to the present embodiment may include pearlite. There are cases where pearlite is transformed from austenite during cooling at the time of annealing, during alloying treatment, and the like. The upper limit value for the amount of pearlite is preferably 10 area%. In a case where the upper limit value for the pearlite content is set to 10 area%, it is prevented that the amount of residual austenite is 4 area% or less, and strength and ductility can be ensured. A more preferable upper limit value for the amount of pearlite is 3 area%, 2 area%, or 1 area%. In addition, since it is favorable to have a smaller amount of pearlite, the lower limit value for the amount of pearlite is 0 area%.

In a case where a steel sheet includes one or both of ferrite and tempered martensite, it is preferable that the average grain size of ferrite and tempered martensite is set to 10 μm or less. In this case, since the structures become fine, a steel sheet is highly strengthened. Moreover, since the structures become homogenized, plastic strain is uniformly introduced to a steel sheet, so that uniform elongation of a steel sheet is improved. The average grain size of ferrite and tempered martensite is more preferably 7 μm or less and is further preferably 5 μm or less.

Hereinafter, methods of identifying the foregoing structure will be described. All of the identifying methods described below are performed in the 1/4 t portion of a steel sheet.

Observation of ferrite is performed by means of an optical microscope using a cut surface of a sample which has been subjected to polishing and nital etching. In a normal optical microscope image, ferrite appears to be white. Therefore, the area ratio of a white portion is measured as the fraction of ferrite. The area ratio is measured by performing image analysis of a photograph of the structure.

The volume fraction of residual austenite is obtained by the X-ray diffraction method. The volume fraction obtained by this way may be regarded as substantially the same as the area ratio.

Observation of fresh martensite is performed by means of an optical microscope using a cut surface of a sample which has been subjected to polishing and Le Pera etching.

Regarding pearlite, a cut surface of a sample which has been subjected to polishing and nital etching is observed by means of a scanning electron microscope (SEM), and the area ratio of a region constituted of a lamellar structure is measured as the area ratio of pearlite.

Bainite and tempered martensite can be determined by observing a cut surface of a suitably prepared sample at 5,000 magnification using a scanning electron microscope (SEM). Structures other than ferrite, martensite, residual austenite, and pearlite, and structures in which cementite is precipitated at one direction are regarded as bainite. Structures in which cementite is precipitated at two or more directions can be regarded as tempered martensite.

On the other hand, in order to omit the determination work described above, the method of identifying bainite and tempered martensite can also be suitably selected in accordance with the method of generating tempered martensite.

As an example of techniques of generating tempered martensite in the steel sheet according to the present embodiment, the temperature of the steel sheet is set to a temperature of Ms to Mf points before performing austempering treatment (which will be described below). In addition, as another example of techniques of generating tempered martensite in the steel sheet according to the present embodiment, a steel sheet is subjected to tempering treatment after annealing ends. In a case where such tempering treatment is not performed, no tempered martensite is present.

In a case where no tempered martensite is present, the area ratio of structures other than ferrite, martensite, residual austenite, and pearlite can be regarded as the area ratio of bainite.

In a case where tempered martensite is generated by performing tempering treatment after annealing ends, the amount of martensite in a steel sheet before tempering treatment is measured, and this amount of martensite can be regarded as the amount of tempered martensite obtained after tempering treatment.

In a case where tempered martensite is generated by setting the temperature of a steel sheet is set to a temperature of the Ms to Mf points before austempering treatment, the amount of tempered martensite can be assumed based on the amount of change in the volume expansion amount of the steel sheet. The reason is that the volume increases when austenite is transformed into martensite or bainite. The amount of increase in the volume of the steel sheet within 0.1 seconds after the temperature of the steel sheet is set to a temperature of Ms to Mf can be regarded as the amount of tempered martensite, and the amount of increase in the volume after that can be regarded as the amount of bainite.

Next, mechanical properties of the steel sheet according to the present embodiment will be described.

It is preferable that the tensile strength of the steel sheet according to the present embodiment is 440 MPa or more. The reason is that the sheet thickness is reduced by high-strengthening to contribute to weight reduction, when a steel sheet is used as a material for a vehicle. In addition, when the steel sheet according to the present embodiment is subjected to press forming, it is desirable that uniform elongation (uEL) and hole expansibility ($\lambda$) are excellent. It is desirable that the product "TSxuEL" of tensile strength and uniform elongation is 20,000 MPa·% or more and the product "TS×$\lambda$" of tensile strength and hole expansibility is 20,000 MPa·% or more. The chemical composition and the configuration of a metallographic structure in the 1/4 t portion are within the ranges described above, so that such mechanical properties can be achieved.

The steel sheet according to the present embodiment may be a hot dip galvanized steel sheet having a hot dip galvanized layer provided on its surface or may be a galvannealed steel sheet having a galvannealed layer provided on its surface. The hot dip galvanized layer or the galvannealed layer have an effect of rapidly enhancing corrosion resistance, a fine view, and the like of the steel sheet according to the present embodiment. On the other hand, the hot dip galvanized layer or the galvannealed layer do not impair the mechanical properties of the steel sheet according to the present embodiment.

Next, a method of manufacturing the steel sheet according to the present embodiment will be described.

The steel sheet according to the present embodiment is manufactured as follows. A steel having the composition described above is smelted by a normal method. A slab or a steel ingot is produced through casting. Then, it is heated and is subjected to hot rolling. After an obtained hot rolled steel sheet is subjected to pickling, first annealing is performed. Thereafter, second annealing is performed. As necessary, cold rolling may be performed between the first annealing and the second annealing.

Hot rolling may be performed in a normal continuous hot rolling line. The first annealing and the second annealing may be performed in any of an annealing furnace and a continuous annealing line as long as the conditions described below are satisfied. Moreover, skin pass rolling may be performed for a steel sheet after cold rolling.

Each of the cooling conditions after hot rolling, the coiling conditions, the annealing conditions for the first annealing, the cold rolling ratio, and the annealing conditions for the second annealing is limited to the range described below, so that a metallographic structure satisfying the regulations of Expression 1 and Expression 2 can be obtained.

As long as the chemical composition is within the range of the steel sheet according to the present embodiment described above, a molten steel may be smelted by a normal blast furnace method, or a raw material may include a large amount of scraps as in a steel produced by an electric furnace method. A slab may be manufactured through a normal continuous casting process or may be manufactured through thin slab casting.

The slab or the steel ingot described above is heated, and hot rolling is performed. In this case, the heating temperature and the hot rolling temperature are not particularly regulated.

A hot rolled steel sheet obtained by performing finish rolling is cooled and wound, thereby forming a coil. In order to restrain pearlitic transformation and to refine the grain size, it is preferable that the cooling rate from the end of hot rolling to the start of coiling is high. Therefore, the average cooling rate within the temperature range of 800°C to the coiling temperature after hot rolling is set to 10 °C/s or more. Moreover, in order to refine the grain size, it is preferable that the average cooling rate within the temperature range of 800°C to the coiling temperature after hot rolling is 30 °C/s or more. In order to accurately control the coiling temperature, it is preferable that the upper limit for the average cooling rate within the temperature range of 800°C to the coiling temperature after hot rolling is 100 °C/s or less. "The average cooling rate within the temperature range of 800°C to the coiling temperature" is a value obtained by dividing the difference between 800°C and the coiling temperature by the elapsed time taken for a steel sheet to be cooled from 800°C to the coiling temperature. In a case where finish rolling of hot rolling ends at a temperature less than 800°C, the average cooling rate within the temperature range of the temperature immediately after finish rolling ends to the coiling temperature may be adopted as a control target, in place of the average cooling rate within the temperature range of 800°C to the coiling temperature.

The coiling temperature after cooling is set to 600°C or less. If the coiling temperature exceeds 600°C, a hot-rolled structure becomes a non-uniform structure due to coarsening of ferrite-pearlite, and thus coarse cementite is generated at the time of the first annealing performed thereafter. There are cases where residual austenite after the second annealing is coarsened due to this coarse cementite and cementite remains after the second annealing so that the amount of residual austenite is reduced. In any of these cases, mechanical properties of a steel sheet deteriorate. The coiling temperature is more preferably 550°C or less and is further preferably 500°C or less.

A hot rolled steel sheet obtained in this manner is annealed after being cooled to room temperature.

This annealing performed after hot rolling (first annealing) is an important process in the method of manufacturing the steel sheet according to the present embodiment. In order to satisfy the foregoing (Expression 1) in a final structure, Mn is required to be concentrated in residual austenite by using annealing. The reason is that (Expression 1) cannot be satisfied by only the annealing performed after cold rolling (second annealing).

In the first annealing, a hot rolled steel sheet is heated and is retained within the temperature range of 550°C to 750°C for 30 minutes or more. Then, it is cooled to the Ms point or less. A steel sheet satisfying both (Expression 1) and Expression 2 can be obtained by performing this annealing.

In a case where a first annealing temperature is within a temperature range less than 550°C, residual austenite in a structure of an ultimately obtained steel sheet does not satisfy (Expression 2). This reason is uncertain, but it is assumed that in the case where the first annealing temperature is less than 550°C, coarse cementite is generated in prior austenite grain boundaries and packet grain boundaries during the first annealing, and this coarse cementite is transformed into coarse austenite having an aspect ratio of 2.0 or less during the second annealing.

On the other hand, if the first annealing temperature exceeds 750°C, martensite increases at the time the first annealing ends, so that (Expression 1) is not satisfied. This reason is uncertain, but it is assumed that (Expression 1) is not satisfied because the structure of a steel sheet substantially becomes an austenitic single phase at the time of the first annealing, so that segregation of Mn no longer occurs. Therefore, the upper limit for the first annealing temperature is set to 750°C.

In addition, when a steel sheet is heated to the first annealing temperature, the average heating rate within the temperature range of 300°C to 550°C is required to be 1 °C/s or more. In a case where this condition is not satisfied, the metallographic structure of the steel sheet does not satisfy (Expression 2), so that hole expansibility is deteriorated. This reason is uncertain, but it is assumed that in a case where the average heating rate within the temperature range of 300°C to 550°C is less than 1 °C/s, cementite is precipitated at prior austenite grain boundaries and packet grain boundaries during heating and the cementite becomes austenite having an aspect ratio of 2.0 or less. The limitation of the average heating rate is required to satisfy not only the first annealing but also the second annealing. The reason is the same as that for the first annealing. "The average heating rate within the temperature range of 300°C to 550°C" is a value obtained by dividing the difference between the upper limit and the lower limit for the temperature range (250°C) by the time taken for the temperature of the steel sheet to pass through the temperature range.

The temperature of the steel sheet is not required to be strictly subjected to isothermal retention when annealing is performed. The temperature of the steel sheet need only be within the temperature range of 550°C to 750°C for 30 minutes or more during annealing, and the temperature of the steel sheet may fluctuate within this range. In the case where the time for retaining the temperature of a steel sheet within the range of 550°C to 750°C is less than 30 minutes, the metallographic structure of a steel sheet cannot satisfy (Expression 1). As the reason therefor, it is assumed that the diffusion distance of Mn becomes insufficient due to the insufficient retention time, so that Mn cannot be sufficiently concentrated in austenite.

Cold rolling is not essential for manufacturing the steel sheet according to the present embodiment. However, cold rolling may be performed for a steel sheet to adjust the sheet thickness and to adjust the shape. Cold rolling exhibits effects of refining the metallographic structure of a steel sheet after annealing, and thereby improving mechanical properties. However, in a case where the rolling reduction of cold rolling is excessively high, there are cases where local ductility is degraded.

After the first annealing, or after any cold rolling, the steel sheet is subjected to the second annealing. In the method of manufacturing the steel sheet according to the present embodiment, the annealing temperature of the second annealing is set to a temperature at which both ferrite and austenite are present.

In the case where the annealing temperature of the second annealing is less than 550°C, the amount of austenite obtained through the second annealing is reduced, so that sufficient residual austenite cannot remain in an ultimately obtained steel sheet. If the second annealing temperature exceeds 800°C, Mn which has been concentrated in austenite through the first annealing is diffused again, so that an ultimately obtained steel sheet does not satisfy (Expression 1). In addition, in a case where the second annealing is performed at an annealing temperature exceeding 800°C with respect to a steel in which it becomes the austenitic single phase range at 800°C, the structure of the steel sheet according to the present embodiment cannot be obtained.

In addition, the temperature retention time in the second annealing (the retention time at 550°C to 800°C) is set to 5 seconds or more. In a case where the temperature retention time of the second annealing is less than 5 seconds, carbide is not completely dissolved, and the amount of ultimately obtained residual austenite is reduced. In addition, in a case where cold rolling is performed, recrystallization is not in progress, so that ductility of an ultimately obtained steel sheet significantly is deteriorated. The upper limit value for the temperature retention time of the second annealing is not required to be regulated. However, in consideration of productivity, it is preferable that the upper limit is set to 1,000 seconds.

Cooling after the second annealing is important for promoting transformation from austenite phase to ferrite phase, partitioning C in untransformed austenite phase, and stabilizing the austenite. If the average cooling rate in cooling after the second annealing is set to be less than 1 °C/s, pearlite is generated, so that the amount of ultimately obtained residual austenite is reduced. In the steel sheet according to the present embodiment, since Mn is concentrated in residual austenite, the average cooling rate in cooling after the second annealing is allowed to be reduced to 1 °C/s. On the other hand, in the case where the average cooling rate in cooling after the second annealing exceeds 200 °C/s, ferritic transformation cannot sufficiently proceed. Therefore, it is preferable that the upper limit for the average cooling rate in cooling after the second annealing is set to 200 °C/s. In a case where a steel sheet is coated, the average cooling rate in cooling after the second annealing indicates the average cooling rate within the temperature range from the second annealing temperature to the cooling stop temperature described below (that is, a value obtained by dividing the difference between the second annealing temperature and the cooling stop temperature by the time taken to cool a steel sheet from the second annealing temperature to the cooling stop temperature). In a case where a steel sheet is not coated, the average cooling rate in cooling after the second annealing indicates the average cooling rate within the temperature range from the second annealing temperature to 430°C (that is, a value obtained by dividing the difference between the second annealing temperature and room temperature by the time taken to cool a steel sheet from the second annealing temperature to room temperature).

In a case where a steel sheet is not coated, cooling after the second annealing may be performed as it is until achieved room temperature. In addition, in a case where a steel sheet is coated, manufacturing is performed as follows.

In a case where a hot dip galvanized steel sheet is manufactured, cooling after the second annealing is stopped within the temperature range of 430°C to 500°C. Subsequently, a cold rolled steel sheet is immersed in a coating bath of hot dip zinc, thereby performing hot dip galvanizing. The conditions for the coating bath may be set to a normal range. After coating treatment, it may be cooled to room temperature.

In a case where a galvannealed steel sheet is manufactured, the steel sheet is subjected to hot dip galvanizing. Thereafter, before the steel sheet is cooled to room temperature, alloying treatment is performed for the steel sheet at a temperature of 450°C to 600°C. The conditions for alloying treatment may be set to a normal range.

In the steel sheet according to the present embodiment, Mn is concentrated in austenite by the manufacturing method described above. Therefore, stable residual austenite can be obtained even at room temperature by only cooling as it is to room temperature after the second annealing. In addition, as in normal TRIP steels as disclosed in Patent Document 1 and the like, there is no problem even if cooling after the second annealing is stopped at room temperature or more, and a steel is retained within the temperature range thereof.

When a steel sheet is manufactured as described above, it is possible to obtain the steel sheet, the hot dip galvanized steel sheet, and the galvannealed steel sheet according to the present embodiment.

[Examples]

Hereinafter, the present invention will be further described with reference to Examples.

[Example 1]

First, in order to investigate the influence of the heating rate in the first annealing, an experiment was performed as described below.

A slab having the chemical composition, by unit mass%, consisting of C: 0.10%, Si: 1.0%, Mn: 4.3%, P: 0.010%, S: 0.0020%, Al: 0.03%, N: 0.0020%, O: 0.0012%, and the remainder was Fe and impurities was produced by using a vacuum melting furnace. The obtained slab was heated to 1,200°C and was subjected to hot rolling at the finishing temperature of 921°C. Thereafter, the slab was cooled at the average cooling rate set to 50 °C/s within the temperature range from 800°C to the coiling start temperature and was wound at 450°C. After the wound hot rolled steel sheet was cooled to room temperature, the first annealing was performed. In heating before the first annealing, the average heating rate within the temperature range of 300°C to 550°C was set to various values within a range of 0.01 °C/s to 30 °C/s. The annealing temperature (maximum heating temperature) in the first annealing was set to 570°C. The temperature retention time at the annealing temperature was set to 7,200 seconds (120 minutes) in all of the hot rolled steel sheets. After the temperature retention ended, the hot rolled steel sheets were cooled to room temperature by air cooling. Thereafter, cold rolling at a rolling reduction of 52% was performed for the hot rolled steel sheets, and the second annealing was performed for the cold rolled steel sheets obtained therefrom. In heating before the second annealing, the average heating rate within the temperature range of 300°C to 550°C was set to 3 °C/s, the annealing temperature of the second annealing was set to 620°C, and the retention time was set to 600 s. Then, the cold rolled steel sheets after the second annealing were cooled at the average cooling rate of 10 °C/s within the temperature range from the second annealing temperature to 430°C. $[Mn]_\gamma/[Mn]_{ave}$ and $f_{\gamma s}/f_\gamma$ of the variously obtained steel sheets were obtained by the following way.

The ratio of the Mn concentration in the 1/4 t portion was obtained by polishing a cross section perpendicular to the rolling direction and the rolled surface of the steel sheet and measuring $[Mn]_\gamma$ and $[Mn]_{ave}$ in this cross section by using a field emission scanning electron microscopy.

The value of $f_{\gamma s}/f_\gamma$ in the 1/4 t portion was as follows. First, the fraction $f_{\gamma s}$ of residual austenite in the 1/4 t portion having an aspect ratio of 2.0 or less was obtained by performing EBSP analysis of the 1/4 t portion. In this EBSP analysis, the fcc phase and the bcc phase were separated from each other, and a part in which the fcc phase was in a blocky morphology was regarded as one residual austenite grain, and the aspect ratio was set as the ratio of the longest width and the shortest width of this grain. The amount $f_\gamma$ of all the residual austenite in the 1/4 t portion was obtained through measurement using X-ray diffraction in the 1/4 t portion.

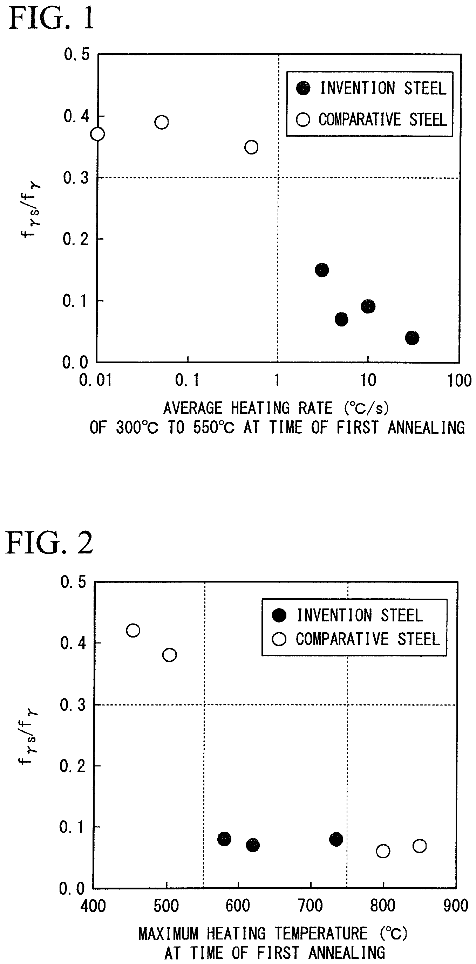

Hereinafter, the test results will be described. As shown in FIG. 1, the sample obtained by the manufacturing method in which the average heating rate at the time of the first annealing was less than 1 °C/s did not satisfy Expression (2). The value of TS×λ of the sample which did not satisfy Expression (2) significantly decreased compared to other samples.

[Example 2]

Next, in order to investigate the influence of the annealing temperature in the first annealing, an experiment was performed as described below.

The slab used in Example 1 was heated to 1,200°C and was subjected to hot rolling at the finishing temperature of 921°C. Thereafter, the slab was cooled at the average cooling rate of 50 °C/s within the temperature range from 800°C to the coiling start temperature, and coiling treatment was performed at 450°C. After the wound hot rolled steel sheet was cooled to room temperature, the first annealing was performed. The average heating rate within the range of 300°C to 550°C before the first annealing (in a case where the annealing temperature was less than 550°C, within the range from 300°C to the annealing temperature) was set to 3.5 °C/s. Subsequently, heating of each of the samples ended at 450°C to 850°C. Thereafter, each of the samples was retained at each annealing temperature for 7,200 seconds, and then each of the samples was cooled to room temperature by air cooling. Thereafter, cold rolling at a cold rolling reduction of 52% was performed for each of the samples, and each of the samples was subjected to the second annealing. The average heating rate within the range of 300°C to 550°C in the second annealing was set to 3.5 °C/s, the annealing temperature was set to 620°C, and the annealing time was set to 600 seconds. After the second annealing ended, each of the samples was cooled at the average cooling rate of 10 °C/s within the temperature range from the second annealing temperature to 430°C.

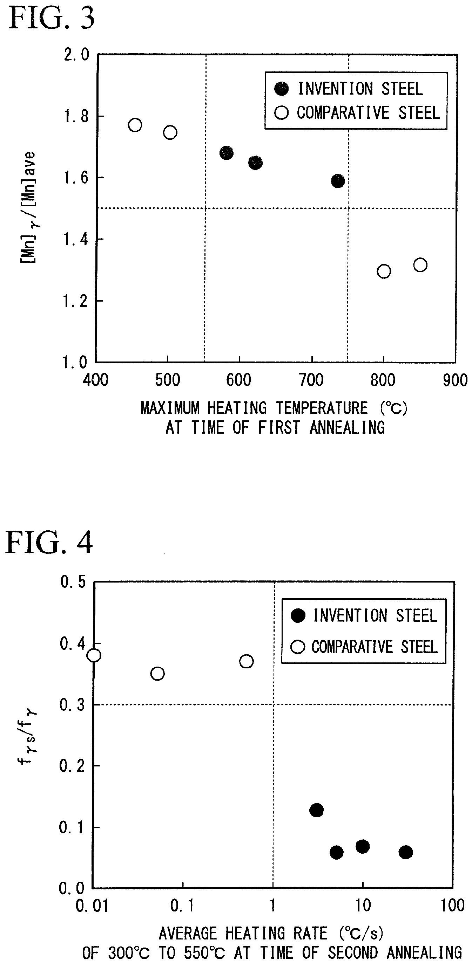

As shown in FIG. 2, the sample obtained by the manufacturing method in which the heating temperature at the time of the first annealing was less than 550°C did not satisfy Expression (2). As a result, in the sample obtained by the manufacturing method in which the heating temperature at the time of the first annealing was less than 550°C, TS×λ was impaired. On the other hand, as shown in FIG. 3, the sample obtained by the manufacturing method in which the heating temperature at the time of the first annealing exceeded 750°C did not satisfy Expression (1). As a result, in the sample obtained by the manufacturing method in which the heating temperature at the time of the first annealing exceeded 750°C, TS×uEL was impaired.

[Example 3]

Next, in order to investigate the influence of the heating rate in the second annealing, an experiment was performed as described below.

The slab used in Example 1 was heated to 1,200°C and was subjected to hot rolling at the finishing temperature of 921°C. Thereafter, the slab was cooled at the average cooling rate set to 50 °C/s within the section from 800°C to the coiling start temperature, and coiling treatment was performed at 450°C. Thereafter, in the first annealing, each of the samples was heated at the average heating rate of 2.5 °C/s within the range of 300°C to 550°C, and each of the samples was retained at 590°C for 7,200 seconds. Then, each of the samples was cooled to room temperature by air cooling. Thereafter, cold rolling at a cold rolling reduction of 52% was performed for each of the samples. Then, each of the samples was heated the average heating rate of 0.01 °C/sec to 30 °C/sec within the range of 300°C to 550°C. Moreover, after each of the samples was retained at the second annealing temperature of 620°C for 600 seconds, each of the samples was cooled at the average cooling rate of 10 °C/s within the temperature range from the second annealing temperature to 430°C.

As shown in FIG. 4, in the case where the average heating rate at the time of the second annealing was less than 1 °C/s, Expression (2) was not satisfied. As a result, TS×λ was impaired.

[Example 4]

Steels A to P were smelted and cast, and slabs were produced. Then, these slabs were subjected to hot rolling, and hot rolled steel sheets were produced. These hot rolled steel sheets were subjected to coiling, pickling, the first annealing, cold rolling, and the second annealing and were randomly subjected to coating treatment and alloying treatment. Accordingly, steel sheets Nos. 1 to 25 were obtained. Table 1-1 and Table 1-2 show the chemical compositions of the steels A to P, and Table 2 shows the manufacturing conditions of the steel sheets Nos. 1 to 25. Table 3 shows the states of the structures in the steel sheets Nos. 1 to 25, and Table 4 shows the mechanical properties of the steel sheets Nos. 1 to 25. The numeric values of the chemical compositions of the steels A to P shown in Table 1-1 and Table 1-2 are indicated by the unit of mass%. The remainder of the chemical composition was Fe and impurities. In the case where coating treatment was performed, the cooling stop temperature before being immersed in the coating bath was set to 460°C. In addition, in the case where alloying treatment was performed, the alloying treatment temperature was set to 520°C.

"The first annealing time" disclosed in Table 2 was a time during which the temperature of the sample material was within the range of 550°C to 750°C, except for the sample material No. 4 and the sample material No. 7. "The first annealing time" of the sample material No. 4 and the sample material No. 7 was a time during which the temperature of the sample material was "the first annealing temperature". "The second annealing time" disclosed in Table 2 was a time during which the temperature of the sample material was within the range of 550°C to 800°C, except for the sample material No. 8 and the sample material No. 21. "The second annealing time" of the sample material No. 8 and the sample material No. 21 was a time during which the temperature of the sample material was "the second annealing temperature". "The average cooling rate after the second annealing" was an average cooling rate within the range from the second annealing temperature to 460°C (that is, the cooling stop temperature before being immersed in the coating bath described above) in the case where the sample material was coated, and was an average cooling rate within the range from the second annealing temperature to 430°C in the case where the sample material was not coated.

The volume fraction of ferrite in the 1/4 t portion was obtained by capturing an image of a photograph of a structure in the 1/4 t portion in a cross section of a sample which had been subjected to polishing and nital etching using an optical microscope and performing image analysis of this photograph of the structure. The value obtained by this technique was the area ratio of ferrite. However, it is assumed that the area ratio and the volume fraction became substantially the same value as each other.

The volume fraction of pearlite in the 1/4 t portion was obtained by capturing an image of a photograph of a structure in the 1/4 t portion in a cross section of a sample which had been subjected to polishing and nital etching using a scanning electron microscope (SEM) and performing image analysis of this photograph of the structure. In the image analysis, a region having a lamellar structure was regarded as pearlite.

The volume fraction of tempered martensite in the 1/4 t portion was obtained by measuring the amount of martensite in the 1/4 t portion of a steel sheet before tempering treatment in a case where tempered martensite was generated by performing tempering treatment after annealing ends, and this amount of martensite was regarded as the amount of tempered martensite in the 1/4 t portion obtained after tempering treatment. In a case where tempered martensite was generated while the temperature of the steel sheet was set to a temperature of the Ms to Mf points before austempering treatment, the volume fraction of tempered martensite in the 1/4 t portion was obtained by measuring the amount of increase in volume of the steel sheet within 0.1 seconds after the temperature of the steel sheet was set to the temperature range of Ms to Mf, and this amount of increase was regarded as the amount of tempered martensite in the 1/4 t portion obtained after tempering treatment.

In a case where no tempered martensite was present, structures other than ferrite, martensite, residual austenite, and pearlite were regarded as bainite, and the volume fraction of bainite in the 1/4 t portion was calculated based on the volume fractions of ferrite, martensite, residual austenite, and pearlite in the 1/4 t portion. In a case where tempered martensite was generated by performing tempering treatment after annealing ends, structures other than ferrite, martensite, residual austenite, pearlite, and tempered martensite were regarded as bainite, and the volume fraction of bainite in the 1/4 t portion was calculated based on the volume fractions of ferrite, martensite, residual austenite, pearlite, and tempered martensite in the 1/4 t portion. In a case where tempered martensite was generated while the temperature of a steel sheet was set to a temperature of the Ms to Mf points before austempering treatment, the volume fraction of bainite in the 1/4 t portion was obtained by having the amount of increase in volume of the steel sheet after 0.1 seconds from when the temperature of the steel sheet was set to a temperature of Ms to Mf, as the volume fraction of bainite in the 1/4 t portion.

The volume fraction of residual austenite in the 1/4 t portion was obtained by the X-ray diffraction method.

The volume fraction of fresh martensite in the 1/4 t portion was obtained by capturing an image of a photograph of a structure in a cross section of a sample which had been subjected to polishing and Le Pera etching using an optical microscope and performing image analysis of this photograph of the structure.

The tensile strength (TS), the uniform elongation (u-EL), and the ductility (t-EL) were measured through a tensile test of the steel sheet conforming to JIS Z 2241. The hole expansibility $\lambda$ was measured through a hole expansibility test conforming to the Japan Iron and Steel Federation Standard JFST 1001-1996, using a test piece of 80 mm square. A steel sheet of which TS×uEL and TS×$\lambda$ were 20,000 MPa·% or more was regarded as a steel sheet having excellent mechanical properties.

[Table 1-1]

| Kind of steel | C | Si | Mn | Al | P | S | N | O |
|---|---|---|---|---|---|---|---|---|
| A | 0.17 | 0.23 | 6.05 | 0.030 | 0.005 | 0.0009 | 0.0027 | 0.0011 |
| B | 0.09 | 1.78 | 4.04 | 0.040 | 0.008 | 0.0007 | 0.0033 | 0.0008 |
| C | 0.14 | 1.51 | 3.36 | 0.050 | 0.007 | 0.0006 | 0.0032 | 0.0012 |
| D | 0.27 | 1.63 | 2.10 | 0.029 | 0.008 | 0.0008 | 0.0043 | 0.0010 |
| E | 0.22 | 1.35 | 0.90 | 0.039 | 0.011 | 0.0007 | 0.0049 | 0.0007 |
| F | 0.17 | 0.28 | 6.11 | 0.039 | 0.005 | 0.0009 | 0.0040 | 0.0008 |
| G | 0.19 | 1.05 | 5.35 | 0.044 | 0.006 | 0.0011 | 0.0039 | 0.0008 |
| H | 0.20 | 0.21 | 6.07 | 0.026 | 0.014 | 0.0011 | 0.0043 | 0.0012 |
| I | 0.13 | 1.64 | 5.45 | 0.030 | 0.005 | 0.0009 | 0.0027 | 0.0011 |
| J | 0.17 | 1.78 | 4.04 | 0.040 | 0.008 | 0.0007 | 0.0038 | 0.0011 |
| K | 0.15 | 0.13 | 3.60 | 0.037 | 0.008 | 0.0005 | 0.0033 | 0.0009 |
| L | 0.10 | 1.53 | 4.85 | 0.028 | 0.009 | 0.0004 | 0.0021 | 0.0008 |
| M | <u>0.02</u> | 1.35 | 7.30 | 0.035 | 0.004 | 0.0017 | 0.0027 | 0.0012 |
| N | 0.09 | 1.23 | <u>0.40</u> | 0.057 | 0.005 | 0.0015 | 0.0040 | 0.0007 |
| O | 0.06 | 1.34 | 2.20 | 0.036 | 0.009 | 0.0012 | 0.0035 | 0.0013 |
| P | 0.21 | 1.32 | <u>14.00</u> | 0.045 | 0.009 | 0.0007 | 0.0045 | 0.0009 |
| *Unit: mass% | | | | | | | | |

[Table 1-2]

| Kind of steel | Ti | Nb | V | W | Cr | Mo | Cu | Ni | B | Ca | REM | Mg | Zr | Sb | Sn | As | Te | C×Mn |
|---|---|---|---|---|---|---|---|---|---|---|---|---|---|---|---|---|---|---|
| A | | | | | | | | | | | | | | | | | | 1.01 |
| B | | | | | | | | | | | | | | | | | | 0.37 |
| C | | | | | | | | | | 0.0010 | | 0.0010 | | | | | | 0.47 |
| D | | | | | | | | | | | | | | | | | | 0.57 |
| E | | | | | | | | 2.70 | | | | | | | | | | 0.20 |
| F | 0.020 | 0.024 | | | | | | | | | | | | | | | | 1.04 |
| G | | | 0.030 | 0.010 | | | | | | | | | | | | | | 1.02 |
| H | | | | | 0.20 | 0.29 | 0.17 | | | | | | | | | | | 1.20 |
| I | | | | | | | | | 0.0012 | | | | | | | | | 0.71 |
| J | | | | | | | | | | | | | | 0.0020 | 0.0010 | | | 0.69 |
| K | | | | | | | | | | | 0.0010 | | 0.0020 | | | | | 0.54 |
| L | | | | | | | | | | | | | | | | 0.0010 | 0.0020 | 0.49 |
| M | | | | | | | | | | | | | | | | | | 0.15 |
| N | | | | | | | | | | | | | | | | | | 0.03 |
| O | | | | | | | | | | | | | | | | | | 0.13 |
| P | | | | | | | | | | | | | | | | | | 2.94 |
| *Unit: mass% | | | | | | | | | | | | | | | | | | |

[Table 2]

| Sample material No. | Kind of steel | Average cooling rate [°C/s] *1 | Coiling temperature [°C] | Average heating rate [°C/s] *2 | First annealing temperature [°C] | First annealing time [min] | Cold rolling [%] | Average heating rate [°C/s] *3 | Second annealing temperature [°C] | Second annealing time [s] | Average cooling rate [°C/s] *4 | Coating treatment *5 |
|---|---|---|---|---|---|---|---|---|---|---|---|---|
| 1 | A | 45 | 450 | 1.2 | 600 | 180 | 15 | 5 | 720 | 85 | 40 | Alloying |
| 2 | A | 45 | 450 | 1.5 | 600 | 20 | 15 | 5 | 760 | 85 | 40 | None |
| 3 | B | 45 | 400 | 1.5 | 570 | 180 | 15 | 5 | 750 | 70 | 40 | Alloying |
| 4 | B | 45 | 400 | 1.5 | 770 | 180 | 15 | 5 | 790 | 80 | 40 | None |
| 5 | C | 45 | 400 | 1.5 | 580 | 180 | 15 | 5 | 790 | 75 | 40 | Hot dip |
| 6 | D | 45 | room temperature | 1.4 | 700 | 180 | 15 | 5 | 780 | 70 | 40 | None |
| 7 | D | 45 | 450 | 1.5 | 500 | 180 | 15 | 5 | 790 | 70 | 40 | Hot dip |
| 8 | D | 45 | room temperature | 1.5 | 700 | 180 | 15 | 5 | 540 | 70 | 40 | Hot dip |
| 9 | E | 45 | 400 | 1.5 | 600 | 180 | 15 | 5 | 780 | 80 | 40 | None |
| 10 | E | 45 | 400 | 1.5 | 600 | 180 | 15 | 5 | 780 | 80 | 0.5 | None |
| 11 | F | 45 | 450 | 1.5 | 580 | 180 | 15 | 5 | 720 | 85 | 40 | Hot dip |
| 12 | F | 45 | 450 | 1.5 | 580 | 180 | 15 | 5 | 660 | 3 | 40 | Alloying |
| 13 | G | 45 | 480 | 1.5 | 590 | 180 | 15 | 5 | 720 | 70 | 40 | None |
| 14 | G | 45 | 480 | 1.5 | 640 | 180 | 15 | 0.7 | 770 | 70 | 40 | Hot dip |
| 15 | H | 45 | 450 | 1.1 | 560 | 180 | 15 | 5 | 710 | 80 | 40 | Alloying |
| 16 | H | 45 | 450 | 0.6 | 640 | 180 | 15 | 5 | 740 | 80 | 40 | None |
| 17 | I | 45 | 420 | 1.5 | 660 | 180 | 15 | 5 | 720 | 85 | 40 | None |
| 18 | J | 45 | 450 | 1.5 | 580 | 180 | 15 | 5 | 710 | 70 | 40 | Hot dip |
| 19 | K | 45 | 400 | 1.5 | 600 | 180 | 15 | 5 | 760 | 80 | 40 | None |
| 20 | L | 45 | room temperature | 2.0 | 580 | 180 | 15 | 5 | 720 | 85 | 40 | Alloying |

(continued)

| Sample material No. | Kind of steel | Average cooling rate [°C/s] *1 | Coiling temperature [°C] | Average heating rate [°C/s] *2 | First annealing temperature [°C] | First annealing time [min] | Cold rolling [%] | Average heating rate [°C/s] *3 | Second annealing temperature [°C] | Second annealing time [s] | Average cooling rate [°C/s] *4 | Coating treatment *5 |
|---|---|---|---|---|---|---|---|---|---|---|---|---|
| 21 | L | 45 | room temperature | 1.5 | 580 | 180 | 15 | 5 | 820 | 70 | 40 | None |
| 22 | M | 45 | 450 | 1.5 | 590 | 180 | 15 | 5 | 780 | 70 | 40 | Alloying |
| 23 | N | 45 | 450 | 1.5 | 600 | 180 | 15 | 5 | 770 | 70 | 40 | None |
| 24 | O | 45 | 450 | 2.0 | 610 | 180 | 15 | 5 | 770 | 70 | 40 | Alloying |
| 25 | P | 45 | 450 | 1.5 | 580 | 180 | 15 | 5 | 710 | 70 | 40 | None |

*1 The average cooling rate within a range from 800°C to the coiling start temperature after hot rolling
*2 The average heating rate within the temperature range of 300°C to 550°C. In sample material 7, the average heating rate within the temperature range of 300°C to 500°C
*3 The average heating rate within the temperature range of 300°C to 550°C. In sample material 8, the average heating rate within the temperature range of 300°C to 540°C
*4 The average cooling rate after second annealing
*5 The cooling stop temperature of 460°C for immersion in the coating bath, the alloying treatment temperature of 520°C

[Table 3]

| Sample material No. | Volume fraction of ferrite [%] | Volume fraction of pearlite [%] | Volume fraction of bainite [%] | Volume fraction of tempered martensite [%] | Volume fraction of fresh martensite [%] | Volume fraction of residual austenite [%] | $[Mn]\gamma/[Mn]_{ave}$ | $f\gamma_s/f\gamma$ |
|---|---|---|---|---|---|---|---|---|
| 1 | 25 | 0 | 30 | 0 | 18 | 27 | 1.62 | 0.13 |
| 2 | 12 | 0 | 18 | 0 | 61 | 9 | 1.43 | 0.23 |
| 3 | 26 | 0 | 0 | 58 | 0 | 16 | 1.58 | 0.12 |
| 4 | 35 | 0 | 0 | 0 | 56 | 9 | 1.43 | 0.23 |
| 5 | 28 | 0 | 36 | 0 | 23 | 13 | 1.61 | 0.13 |
| 6 | 10 | 0 | 27 | 0 | 47 | 16 | 1.82 | 0.11 |
| 7 | 8 | 0 | 64 | 0 | 15 | 13 | 1.54 | 0.35 |
| 8 | 95 | 0 | 0 | 0 | 0 | 0 | *** | *** |
| 9 | 32 | 0 | 0 | 0 | 50 | 18 | 1.85 | 0.16 |
| 10 | 63 | 0 | 10 | 25 | 0 | 2 | *** | *** |
| 11 | 24 | 0 | 0 | 53 | 0 | 23 | 1.64 | 0.14 |
| 12 | 27 | 0 | 40 | 0 | 30 | 3 | *** | *** |
| 13 | 12 | 0 | 0 | 67 | 0 | 21 | 1.59 | 0.12 |
| 14 | 5 | 0 | 10 | 0 | 72 | 13 | 1.53 | 0.36 |
| 15 | 16 | 0 | 0 | 66 | 0 | 18 | 1.55 | 0.16 |
| 16 | 25 | 0 | 40 | 0 | 17 | 18 | 1.55 | 0.33 |
| 17 | 35 | 0 | 20 | 28 | 0 | 17 | 1.60 | 0.12 |
| 18 | 25 | 0 | 20 | 34 | 0 | 21 | 1.63 | 0.15 |
| 19 | 26 | 0 | 50 | 0 | 6 | 18 | 1.58 | 0.17 |
| 20 | 35 | 0 | 0 | 47 | 0 | 18 | 1.61 | 0.16 |
| 21 | 0 | 0 | 15 | 0 | 78 | 7 | 1.11 | 0.11 |
| 22 | 75 | 0 | 22 | 0 | 0 | 3 | *** | *** |
| 23 | 84 | 3 | 12 | 0 | 0 | 1 | *** | *** |
| 24 | 74 | 0 | 20 | 0 | 0 | 6 | 1.24 | 0.18 |
| 25 | 0 | 0 | 0 | 0 | 68 | 32 | 1.51 | 0.27 |

Table 4

| Sample material No. | TS [MPa] | uEL [%] | tEL [%] | λ [%] | TS×uEL [MPa·%] | TS×λ [MPa·%] | Remarks |
|---|---|---|---|---|---|---|---|
| 1 | 1325 | 18 | 23 | 24 | 23850 | 31800 | Example of Invention |
| 2 | 1421 | 13 | 13 | 15 | 18473 | 21315 | Comparative Example |
| 3 | 1002 | 21 | 24 | 48 | 21042 | 48096 | Example of Invention |
| 4 | 1006 | 18 | 22 | 28 | 18108 | 28168 | Comparative Example |

(continued)

| Sample material No. | TS [MPa] | uEL [%] | tEL [%] | λ [%] | TS×uEL [MPa·%] | TS×λ [MPa·%] | Remarks |
|---|---|---|---|---|---|---|---|
| 5 | 1045 | 22 | 25 | 42 | 22990 | 43890 | Example of Invention |
| 6 | 1228 | 23 | 26 | 25 | 28244 | 30700 | Example of Invention |
| 7 | 1235 | 17 | 22 | 12 | 20995 | 14820 | Comparative Example |
| 8 | 943 | 14 | 17 | 25 | 13202 | 23575 | Comparative Example |
| 9 | 1156 | 22 | 24 | 29 | 25432 | 33524 | Example of Invention |
| 10 | 842 | 18 | 21 | 29 | 15156 | 24418 | Comparative Example |
| 11 | 1285 | 17 | 23 | 26 | 21845 | 33410 | Example of Invention |
| 12 | 1084 | 4 | 7 | 20 | 4336 | 21680 | Comparative Example |
| 13 | 1346 | 16 | 21 | 29 | 21536 | 39034 | Example of Invention |
| 14 | 1463 | 13 | 13 | 13 | 19019 | 19019 | Comparative Example |
| 15 | 1407 | 15 | 19 | 25 | 21105 | 35175 | Example of Invention |
| 16 | 1584 | 15 | 19 | 12 | 23760 | 19008 | Comparative Example |
| 17 | 1175 | 18 | 24 | 26 | 21150 | 30550 | Example of Invention |
| 18 | 1235 | 22 | 23 | 25 | 27170 | 30875 | Example of Invention |
| 19 | 1095 | 21 | 24 | 28 | 22995 | 30660 | Example of Invention |
| 20 | 1007 | 24 | 26 | 32 | 24168 | 32224 | Example of Invention |
| 21 | 1298 | 11 | 13 | 19 | 14278 | 24662 | Comparative Example |
| 22 | 804 | 17 | 22 | 54 | 13668 | 43416 | Comparative Example |
| 23 | 785 | 17 | 24 | 42 | 13345 | 32970 | Comparative Example |
| 24 | 825 | 23 | 26 | 36 | 18975 | 29700 | Comparative Example |
| 25 | 1493 | 11 | 15 | 9 | 16423 | 13437 | Comparative Example |

In Examples Nos. 1, 3, 5, 6, 9, 11, 13, 15, 17 to 20 in which the chemical composition and the manufacturing conditions were appropriate, the volume fraction of residual austenite, $[Mn]_\gamma/[Mn]_{ave}$, and $f_{\gamma s}/f_\gamma$ were appropriately controlled and had excellent mechanical properties.

On the other hand, in the Comparative Example No. 2 in which the annealing time of the first annealing was insufficient, and the Comparative Example No. 4 in which the annealing temperature of the first annealing was excessively high, Mn was not sufficiently concentrated in residual austenite, and TSxuEL was insufficient.

In the Comparative Example No. 7 in which the annealing temperature of the first annealing was insufficient, the volume fraction $f_{\gamma s}$ of residual austenite having an aspect ratio of 2.0 or less was not sufficiently reduced, so that TS×λ was insufficient.

In the Comparative Example No. 8 in which the annealing temperature of the second annealing was insufficient, residual austenite was not included, so that TSxuEL was insufficient.

In the Comparative Example No. 10 in which the average cooling rate after the second annealing was insufficient, the amount of residual austenite was insufficient, so that TS×uEL was insufficient.

In the Comparative Example No. 12 in which the annealing time of the second annealing was insufficient, the amount of residual austenite was insufficient, so that TSxuEL was insufficient.

In the Comparative example No. 14 in which the average cooling rate after the first annealing was insufficient, the volume fraction $f_{\gamma s}$ of residual austenite having an aspect ratio of 2.0 or less was not sufficiently reduced, so that TS×λ was insufficient.

In the Comparative Example No. 16 in which the average heating rate before the first annealing was insufficient, the volume fraction $f_{\gamma s}$ of residual austenite having an aspect ratio of 2.0 or less was not sufficiently reduced, so that TS×λ was insufficient.

In the Comparative Example No. 21 in which the annealing temperature of the second annealing was excessively high, since Mn concentrated in austenite through the first annealing was diffused again, Mn was not sufficiently concentrated in residual austenite, so that TSxuEL was insufficient.

In the Comparative Example No. 22 in which the C content was insufficient and the Comparative Example No. 23 in which the Mn content was insufficient, Mn was not sufficiently concentrated in residual austenite, so that TSxuEL was insufficient.

In the Comparative Example No. 24 in which CxMn was insufficient, Mn was not sufficiently concentrated in residual austenite, so that TSxuEL was insufficient.

In the Comparative Example No. 25 in which Mn content was excessive, ductility was impaired, so that TS×uEL and TS×λ were insufficient.

**Claims**

1.  A steel sheet comprising, by unit mass%,
    C: 0.03% to 0.40%,
    Si: 0.01% to 5.00%,
    Mn: 0.50% to 12.00%,
    Al: 0.001 % to 5.000%,
    P: 0.150% or less,
    S: 0.0300% or less,
    N: 0.0100% or less,
    O: 0.0100% or less,
    Cr: 0% to 5.00%,
    Mo: 0% to 5.00%,
    Ni: 0% to 5.00%,
    Cu: 0% to 5.00%,
    Nb: 0% to 0.500%,
    Ti: 0% to 0.500%,
    V: 0% to 0.500%,
    W: 0% to 0.500%,
    B: 0% to 0.0030%,
    Ca: 0% to 0.0500%,
    Mg: 0% to 0.0500%,
    Zr: 0% to 0.0500%,
    REM: 0% to 0.0500%,
    Sb: 0% to 0.0500%,
    Sn: 0% to 0.0500%,
    As: 0% to 0.0500%,
    Te: 0% to 0.0500%, and
    a remainder including Fe and impurities,
    wherein a metallographic structure in a 1/4 t portion contains residual austenite of 4 volume% to 70 volume%,
    an average Mn concentration $[Mn]_\gamma$ in the residual austenite by unit mass% satisfies Expression 1 with respect to an average Mn concentration $[Mn]_{ave}$ of the entire 1/4 t portion by unit mass%, in the 1/4 t portion,
    a volume fraction $f_{\gamma s}$ of the residual austenite having an aspect ratio of 2.0 or less and a volume fraction $f_\gamma$ of all the residual austenite satisfy Expression 2, in the 1/4 t portion, and
    a C content [C] and a Mn content [Mn] by unit mass% satisfy Expression 3.

$$[Mn]_\gamma/[Mn]_{ave} > 1.5 \ldots \text{(Expression 1)}$$

$$f_{\gamma s}/f_\gamma \leq 0.30 \ldots \text{(Expression 2)}$$

$$[C] \times [Mn] \geq 0.15 \ldots \text{(Expression 3)}$$

2. The steel sheet according to Claim 1, comprising, by unit mass%,
   Mn: 3.50% to 12.00%.

3. The steel sheet according to Claim 1 or 2, comprising, by unit mass%, one or more selected from the group consisting of
   Cr: 0.01% to 5.00%,
   Mo: 0.01% to 5.00%,
   Ni: 0.01% to 5.00%,
   Cu: 0.01% to 5.00%,
   Nb: 0.005% to 0.500%,
   Ti: 0.005% to 0.500%,
   V: 0.005% to 0.500%,
   W: 0.005% to 0.500%,
   B: 0.0001% to 0.0030%,
   Ca: 0.0001 % to 0.0500%,
   Mg: 0.0001 % to 0.0500%,
   Zr: 0.0005% to 0.0500%,
   REM: 0.0005% to 0.0500%,
   Sb: 0.0050% to 0.0500%,
   Sn: 0.0050% to 0.0500%,
   As: 0.0050% to 0.0500%, and
   Te: 0.0050% to 0.0500%.

4. The steel sheet according to any one of Claims 1 to 3, comprising:
   a hot dip galvanized layer on a surface of the steel sheet.

5. The steel sheet according to any one of Claims 1 to 3, comprising:
   a galvannealed layer on a surface of the steel sheet.

FIG. 1

AVERAGE HEATING RATE (°C/s)
OF 300°C TO 550°C AT TIME OF FIRST ANNEALING

FIG. 2

MAXIMUM HEATING TEMPERATURE (°C)
AT TIME OF FIRST ANNEALING

## FIG. 3

MAXIMUM HEATING TEMPERATURE (°C)
AT TIME OF FIRST ANNEALING

## FIG. 4

AVERAGE HEATING RATE (°C/s)
OF 300°C TO 550°C AT TIME OF SECOND ANNEALING

## INTERNATIONAL SEARCH REPORT

| | International application No. |
|---|---|
| | PCT/JP2016/077801 |

A. CLASSIFICATION OF SUBJECT MATTER
*C22C38/00*(2006.01)i, *C21D9/46*(2006.01)i, *C22C38/06*(2006.01)i, *C22C38/58* (2006.01)i

According to International Patent Classification (IPC) or to both national classification and IPC

B. FIELDS SEARCHED

Minimum documentation searched (classification system followed by classification symbols)
C22C38/00, C21D9/46, C22C38/06, C22C38/58

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2013-76162 A (JFE Steel Corp.), 25 April 2013 (25.04.2013), examples; tables 1 to 3 & US 2014/0230971 A1 examples; tables 1 to 3 & WO 2013/038637 A1 & EP 2757169 A1 & CN 103797145 A | 1-5 |
| A | JP 2016-50337 A (Kobe Steel, Ltd.), 11 April 2016 (11.04.2016), examples; tables 1 to 3 (Family: none) | 1-5 |
| A | WO 2016/067626 A1 (JFE Steel Corp.), 06 May 2016 (06.05.2016), examples; tables 1 to 4 (Family: none) | 1-5 |

☒ Further documents are listed in the continuation of Box C.  ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 07 November 2016 (07.11.16) | 15 November 2016 (15.11.16) |

| Name and mailing address of the ISA/ <br> Japan Patent Office <br> 3-4-3, Kasumigaseki, Chiyoda-ku, <br> Tokyo 100-8915, Japan | Authorized officer <br><br> Telephone No. |

Form PCT/ISA/210 (second sheet) (January 2015)

**INTERNATIONAL SEARCH REPORT**

International application No.

PCT/JP2016/077801

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-237042 A  (JFE Steel Corp.),<br>06 December 2012 (06.12.2012),<br>example 1; tables 1 to 3<br>(Family: none) | 1-5 |
| A | US 2014/0205488 A1  (HYUN Jo Jun),<br>24 July 2014 (24.07.2014),<br>examples; tables 1 to 2<br>(Family: none) | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61217529 B
- JP H559429 B
- JP 2005330584 A
- JP 5082451 B

**Non-patent literature cited in the description**

- **TAKASHI FURUKAWA ; OSAMU MATSUMURA.** *Japan Society for Heat Treatment,* 1997, vol. 37 (4), 204